# EUROPÄISCHE PATENTSCHRIFT

(11) **EP 3 946 900 B1**
(45) Veröffentlichungstag und Bekanntmachung des Hinweises auf die Patenterteilung: **12.11.2025**
(21) Anmeldenummer: 20734903.6
(22) Anmeldetag: 24.06.2020
(51) Int. Cl.: B29C 64/25, B33Y 30/00

(54) **LAMELLENABDECKUNG**
LAMELLAR COVERING
STRUCTURE DE RECOUVREMENT À LAMELLES

(30) Priorität: 09.07.2019 DE 102019210110
(43) Veröffentlichungstag der Anmeldung: 09.02.2022
(73) Patentinhaber: EOS GmbH Electro Optical Systems, 82152 Krailling (DE)
(72) Erfinder: STARR, Uwe, 86926 Greifenberg (DE)
(74) Vertreter: Prüfer & Partner mbB Patentanwälte · Rechtsanwälte
(86) Internationale Anmeldenummer: PCT/EP2020/067727
(87) Internationale Veröffentlichungsnummer: WO 2021/004796

(56) Entgegenhaltungen:
- EP-A1- 1 204 517
- EP-B1- 1 871 568
- CN-A- 108 099 188
- DE-A1- 102016 123 281
- US-A1- 2017 129 181
- MERKLEIN MARION ET AL: "Hybrid Additive Manufacturing Technologies - An Analysis Regarding Potentials and Applications", PHYSICS PROCEDIA, ELSEVIER, AMSTERDAM, NL, vol. 83, 16 September 2016 (2016-09-16), pages 549 - 559, XP029731665, ISSN: 1875-3892, DOI: 10.1016/J.PHPRO.2016.08.057

## Beschreibung

Die vorliegende Erfindung bezieht sich auf eine Vorrichtung und ein Verfahren zum Herstellen eines dreidimensionalen Objekts durch selektives schichtweises Verfestigen von Aufbaumaterial sowie eine Abdeckeinrichtung zum Abdecken/Abschirmen einer Öffnung in einer Kammerwandung der Vorrichtung zum Herstellen eines dreidimensionalen Objekts.

Das genannte Verfahren zum Herstellen von Objekten wird allgemein als additives Herstellverfahren bezeichnet. Additive Herstellvorrichtungen und zugehörige Verfahren sind allgemein dadurch charakterisiert, dass in ihnen Objekte durch Verfestigen eines formlosen Aufbaumaterials Schicht für Schicht hergestellt werden. Die Verfestigung kann beispielsweise durch Zufuhr von Wärmeenergie zum Aufbaumaterial mittels Bestrahlens desselben mit elektromagnetischer Strahlung oder Teilchenstrahlung (z.B. Lasersintern (SLS oder DMLS) oder Laserschmelzen oder Elektronenstrahlschmelzen) herbeigeführt werden. Beispielsweise beim Lasersintern oder Laserschmelzen wird der Einwirkbereich eines Laserstrahls auf eine Schicht des Aufbaumaterials über jene Stellen der Schicht bewegt, die dem Objektquerschnitt des herzustellenden Objekts in dieser Schicht entsprechen.

Im Regelfall findet der additive Herstellvorgang in einer Prozesskammer statt, die zum einen zum Abschirmen des Aufbaumaterials gegenüber Umgebungseinflüssen, zum anderen zum Halten des formlosen Aufbaumaterials dient. Insbesondere, wenn eine Verfestigung von formlosem Aufbaumaterial mittels Wärmeenergie in der Prozesskammer stattfindet, kann die Wandung der Prozesskammer auch der Abschirmung der Umgebung gegenüber der Wärme in der Prozesskammer dienen. Da einzelne Teile der additiven Herstellvorrichtung in der Prozesskammer, beispielsweise ein Beschichter zum Auftragen der Aufbaumaterialschichten oder eine Bestrahlungsvorrichtung, in der Regel von außerhalb der Prozesskammer gesteuert werden, weist die Kammerwandung der Prozesskammer in der Regel Durchbrüche bzw. Öffnungen auf, um eine Verbindung mit den jeweiligen Teilen der additiven Herstellvorrichtung herstellen zu können. Beispielsweise können Antriebsachsen bzw. Führungsarme durch solche Öffnungen hindurchgeführt werden. Allerdings schwächen derartige Öffnungen auch die Abschirmwirkung der Kammerwandung bzw. ermöglichen unter Umständen einen Austritt von Aufbaumaterial und/oder einen Eintritt von Umgebungsfaktoren, insbesondere von Umgebungspartikeln. Daher ist es wünschenswert, die genannten Öffnungen so klein wie möglich zu wählen und so weit wie möglich geschlossen zu halten.

US 2017/129181 A1 beschreibt eine Herstellvorrichtung zur Herstellung eines dreidimensionalen Objekts mit einem beheizbaren Prozessraum und einer Fertigungseinheit. Die Fertigungseinheit ist mittels einer Verfahreinheit, die außerhalb der Prozesskammer vorgesehen ist, in x-Richtung und in y-Richtung verfahrbar. Zur Isolierung der Prozesskammer weist diese an ihrer Oberseite verschiebbare Isolatoren auf.

EP 1 204 517 A1 beschreibt eine Herstellvorrichtung zur Herstellung dreidimensionaler Objekte in einer beheizbaren Prozesskammer. Eine außerhalb der Prozesskammer vorgesehene Verfahreinheit ist thermisch von der Prozesskammer isoliert. Hierfür weist die Decke der Prozesskammer verformbare Bleche auf.

Es ist daher eine Aufgabe der Erfindung, eine Abdeckeinrichtung zur reversiblen Abdeckung einer Öffnung in einer Kammerwandung einer Prozesskammer sowie eine zugehörige additive Herstellvorrichtung und ein zugehöriges additives Herstellverfahren bereitzustellen, mittels derer eine Öffnung in einer Kammerwandung möglichst rasch verschlossen werden kann.

Die Aufgabe wird gelöst durch eine additive Herstellvorrichtung nach Anspruch 1 sowie ein additives Herstellverfahren nach Anspruch 12.

Weiterbildungen der Erfindung werden in den abhängigen Ansprüchen beansprucht. Insbesondere kann eine erfindungsgemäße Vorrichtung auch durch untenstehende bzw. in den abhängigen Ansprüchen ausgeführte Merkmale der erfindungsgemäßen Verfahren weitergebildet sein und umgekehrt.

Anspruch 1 beschreibt eine erfindungsgemäße additive Herstellvorrichtung zum Herstellen eines dreidimensionalen Objekts.

Additive Herstellvorrichtungen und -verfahren, auf die sich die vorliegende Erfindung beziehen, sind insbesondere solche, bei denen Energie als elektromagnetische Strahlung oder Teilchenstrahlung selektiv einer Schicht des Aufbaumaterials zugeführt wird. Die Arbeitsebene ist dabei eine Ebene, in der die Oberseite der Schicht liegt, welcher die Energie zugeführt wird. Hierbei kann die Energieeintragseinrichtung beispielsweise einen Laser oder eine Elektronenstrahlquelle aufweisen. Insbesondere bezieht sich die Erfindung auf Verfahren und Vorrichtungen, bei denen dem Aufbaumaterial mittels Strahlung Wärme zugeführt wird, wie z.B. das Lasersintern oder Laserschmelzen bzw. Elektronenstrahlschmelzen.

Es sei an dieser Stelle auch angemerkt, dass mittels einer erfindungsgemäßen additiven Herstellvorrichtung nicht nur ein Objekt, sondern auch mehrere Objekte gleichzeitig hergestellt werden können. Wenn in der vorliegenden Anmeldung von der Herstellung eines Objekts die Rede ist, dann versteht es sich, dass die jeweilige Beschreibung in gleicher Weise auch auf additive Herstellverfahren und - vorrichtungen anwendbar ist, bei denen mehrere Objekte gleichzeitig hergestellt werden.

Da die Abdeckeinrichtung erfindungsgemäß eine Mehrzahl von Einzelelementen aufweist, ist bei einer Veränderung der Ausdehnung der Abdeckfläche im Vergleich zu einer einstückigen starren Abdeckfläche nur eine geringere Masse zu beschleunigen, nämlich nur die Masse von einem Einzelelement oder einer geringen Anzahl von Einzelelementen. Daher kann die Öffnung in der Prozesskammer rasch verschlossen werden, so dass nur für kurze Zeit, bzw. sogar im Wesentlichen überhaupt nicht ein Material- und Energieübertritt durch die Öffnung hindurch stattfindet und somit das Innere der Prozesskammer in besserer Weise gegenüber der äußeren Umgebung abgeschottet ist. Die Abdeckfläche ist dabei die Fläche der Öffnung, die durch die Einzelelemente der Abdeckeinrichtung so abgedeckt/abgeschirmt wird, dass ein Durchtritt von Material und Energie verringert ist.

Im Vergleich zu Abdeckeinrichtungen, bei denen die Abdeckfläche dadurch variiert wird, dass eine flexible Membran, also ein Rollo, auf- und abgewickelt wird, ergibt sich durch die Erfindung der Vorteil, dass die Einzelelemente robuster ausgestaltet werden können und insbesondere eine größere Wärmebeständigkeit aufweisen können. Bei einem Rollo sind der Wärmebeständigkeit und Robustheit des Materials dadurch Grenzen gesetzt, dass es flexibel sein muss. Weiterhin ist bei einem flexiblen Rollo die Wärmeisolation durch die flexible Membran begrenzt, da diese in ihrer Dicke begrenzt ist, um nicht die Flexibilität der Membran einzuschränken.

Zusammengefasst erweist sich die erfindungsgemäße Ausgestaltung der Abdeckeinrichtung gerade bei additiven Herstellvorrichtungen von Vorteil, da sie die Anforderungen an die Geschwindigkeit und die Wärmeisolation am besten erfüllen kann.

Bevorzugt ist die Ausdehnung der Abdeckfläche in Längsrichtung der Öffnung durch eine Relativbewegung der Einzelelemente gegeneinander in der Längsrichtung der Öffnung variierbar.

Durch die Relativbewegung der Einzelelemente gegeneinander ist es möglich, die Ausdehnung der Abdeckfläche dadurch abzuändern, dass lediglich eines oder eine geringe Anzahl von Einzelelementen bewegt wird, wodurch nur geringe Massen zu beschleunigen sind und dadurch eine Öffnung in der Kammerwandung einer Prozesskammer rascher verschlossen werden bzw. die Einzelelemente rascher bewegt werden können.

Es ist zwischen jeweils zwei Einzelelementen ein Verbindungselement angeordnet**.**

Durch das Vorhandensein eines Verbindungselementes, bevorzugt zwischen jeweils zwei Einzelelementen, gewinnt man eine größere Stabilität der Abdeckeinrichtung ohne den Vorteil der Bewegung kleiner Massen einzubüßen. Eine Ausgestaltung der Abdeckeinrichtung ohne dieses Merkmal ist möglich, funktioniert aber nur dann gut, wenn die Bewegung beim Verschließen der Öffnung auch eine Richtungskomponente in Richtung der Schwerkraft aufweist (wie bei einer Jalousie).

Es sind mindestens zwei Einzelelemente, bevorzugt jeweils zwei Einzelelemente, über ein elastisches Element, insbesondere ein Federelement, bevorzugt eine Rückstellfeder, als Verbindungselement miteinander verbunden.

Wenn ein zwei Einzelelemente miteinander verbindendes Verbindungselement, bevorzugt zwischen jeweils zwei Einzelelementen angeordnete Verbindungselement, Elastizität in der Bewegungsrichtung der Einzelelemente aufweist, dann wird dadurch die Stabilität erhöht. Insbesondere kann dann für eine Rückstellkraft gesorgt werden, die die Einzelelemente so gegeneinander bewegt, dass die Ausdehnung der Abdeckeinrichtung verringert und/oder vergrößert wird, so dass ohne äußere Krafteinwirkung auf die Abdeckeinrichtung, z.B. bei einem Ausfall von Systemkomponenten infolge beispielsweise eines Fehlers in der Stromversorgung, die Öffnung verschlossen wird.

Die Elastizität kann dadurch herbeigeführt werden, dass das Verbindungselement ein Federelement aufweist, welches für eine Rückstellkraft in der Bewegungsrichtung der Einzelelemente relativ zueinander sorgen kann. Hierzu kann entweder ein in dieser Weise geeignetes Federelement mit weiteren Komponenten zusammen das Verbindungselement ausbilden oder aber das Verbindungselement als solches ist ein Federelement. Beispiele für die Ausgestaltung des Federelements wären eine Schraubenfeder, eine Blattfeder, eine Spiralfeder, etc. Anstelle des Federelements kann auch ein Element zum Einsatz kommen, das aus einem elastischen Material, z.B. Gummi, ausgebildet ist. Insbesondere bei hohen Temperaturen in der Prozesskammer, z. B. beim Lasersintern oder Laserschmelzen von Polymeren, ist es jedoch schwierig, hierfür geeignete Materialien zu finden.

Insbesondere kann das elastische Element über ein Scharnier mit einem Einzelelement verbunden sein. Durch die Verbindung eines Verbindungselements mit einem, bevorzugt mit beiden, der zwei Einzelelemente über ein Scharniergelenk kann für eine bessere Beweglichkeit der Einzelelemente relativ zueinander gesorgt werden.

Insbesondere wird dadurch eine Hinderung der Bewegung durch eine starke Rückstellkraft eines elastischen Elements verringert. Somit kann dadurch bewirkt werden, dass die Kraft zum Initiieren einer Bewegung der Einzelelemente sehr klein ist, mit zunehmender Ausdehnung der Abdeckeinrichtung aber eine größere Kraft aufgewendet werden muss.

Weiter bevorzugt weisen die Einzelelemente Lamellen auf, welche im Wesentlichen parallel zueinander ausgerichtet sind, wobei insbesondere ein zwischen zwei Einzelelementen angeordnetes Verbindungselement an einem sich quer, bevorzugt senkrecht, zu einer Lamellenebene erstreckenden Lamellenhalter angreift.

Bevorzugt erstrecken sich die Lamellen annähernd parallel zu der abzudeckenden Öffnung in der Wandung der Prozesskammer, wenn die Abdeckeinrichtung ihre größte Ausdehnung in Längsrichtung der Öffnung aufweist. Durch das Vorhandensein eines Lamellenhalters in einem Einzelelement wird die Lamelle nicht in ihrer Abdeckfunktion dadurch beeinträchtigt, dass ihre Abdeckfläche durch die Anbringung eines Verbindungselements an ihr verringert wird. Solch ein Lamellenhalter ist bevorzugt auf der Seite der Abdeckeinrichtung angebracht, die zur Innenseite der Prozesskammer zeigt. Da er sich bevorzugt quer zur Erstreckungsrichtung der Lamelle ausdehnt, ist für eine Hebelwirkung bei der Bewegung des Einzelelements gesorgt, wodurch sich letzteres mit geringem Kraftaufwand rasch bewegen lässt.

Es greifen zwei Verbindungselemente zu beiden Seiten eines Einzelelements an unterschiedlichen Stellen des Einzelelements, insbesondere seines Lamellenhalters, an. In diesem Fall entsteht bei einer Kraftausübung der Verbindungselemente auf das Einzelelement ein Kippmoment, welches dazu führt, dass beim Vergrößern der Ausdehnung der Abdeckeinrichtung gleichzeitig die Lamelle des Einzelelements gegen das benachbarte Einzelelement gedrückt wird. Dies erhöht die Dichtwirkung. Es versteht sich dabei, dass das Kippmoment nur dann erzeugt werden kann, wenn die beiden Angriffspunkte der Verbindungselemente einen unterschiedlichen Abstand senkrecht zur abzudeckenden Öffnung bzw. senkrecht zur Fläche der Lamelle aufweisen.

Insbesondere können benachbarte Lamellen bei einer nicht vollständigen Abdeckung der Öffnung überlappen.

Im Überlappungszustand sind dabei bevorzugt die Flächen der einzelnen Lamellen annähernd parallel zueinander und annähernd parallel zur abzudeckenden Öffnung. Bei dieser Ausführungsweise der Abdeckeinrichtung kann erreicht werden, dass in jedem Öffnungszustand der Abdeckeinrichtung bzw. für jeden Bedeckungsgrad der Öffnung gewährleistet ist, dass der abgedeckte Teil eine hohe Dichtigkeit aufweist. Dies wäre nicht der Fall, wenn eine geringe Ausdehnung der Abdeckeinrichtung dadurch bewirkt würde, dass die Lamellen gegenüber der Ebene der abzudeckenden Öffnung verkippt würden.

Bevorzugt weisen die Lamellen eine wärmereflektierende Oberfläche auf und sind bevorzugt aus Metall ausgebildet.

Lamellen mit den genannten Eigenschaften können beispielsweise durch hochpolierte dünne Metallbleche realisiert werden, z.B. Edelstahlbleche, die eine schlechte Wärmeleitfähigkeit aufweisen.. Optional kann zur Verbesserung der Wärmereflexion eine dünne Schicht eines hochreflektiven Metalls aufgebracht sein, was sich gerade auch dann anbietet, wenn der Lamellenkörper aus einem Nicht-Metall, beispielsweise einem Kunststoff mit hoher Schmelztemperatur, z.B. einem Polyaryletherketon, ausgebildet ist.

Bevorzugt weist die additive Herstellvorrichtung weiterhin ein innerhalb der Prozesskammer in einer Bewegungsrichtung B über ein Baufeld bewegbares Prozessmodul auf, das zum Durchführen eines zum Herstellen eines dreidimensionalen Objekts erforderlichen Prozesses geeignet ist, wobei die Bewegungsrichtung B parallel zu der Längsrichtung der Öffnung verläuft und wobei an dem Prozessmodul ein Außenverbindungselement angebracht ist, das durch die Öffnung hindurchgeführt ist.

Bei dem Prozessmodul handelt es sich um eine Vorrichtung, die Bestandteil der additiven Herstellvorrichtung ist und zum Durchführen eines zum Herstellen eines dreidimensionalen Objekts erforderlichen Prozessschrittes geeignet ist, insbesondere eines Prozessschrittes, bei dem eine Komponente der Vorrichtung relativ, insbesondere im Wesentlichen parallel, zu einer Aufbaumaterialschicht bewegt wird, wodurch auch eine Bewegung relativ zur Prozesskammer resultiert. Ein entsprechender Prozessschritt kann beispielweise das Auftragen einer Aufbaumaterialschicht sein, bei dem ein Beschichtungsmodul bzw. ein Teil desselben (z.B. eine Auftragsklinge oder -walze) über das Baufeld bewegt wird. Ein weiteres Beispiel wäre ein Belichtungsmodul, das zum Zuführen von Strahlungsenergie zu einzelnen Stellen einer Aufbaumaterialschicht, d.h. zum selektiven Verfestigen des Aufbaumaterials, verwendet wird. Eine Bewegung von Teilen des Belichtungsmoduls könnte darin bestehen, dass eine Strahlablenkvorrichtung (Scanvorrichtung) parallel zur Aufbaumaterialschicht bewegt wird, um dadurch einen möglichst senkrechten Strahlungseinfallwinkel auf die Aufbaumaterialschicht zu gewährleisten. Ein weiteres Beispiel wäre eine Belichterzeile bzw. ein VCSEL-Array, das über das Baufeld bewegt wird. Schließlich kann es sich bei dem Prozessmodul auch beispielsweise um eine Vorrichtung handeln, die zur Überwachung des Herstellvorgangs über das Baufeld bewegt wird, z.B. eine Temperaturmessvorrrichtung oder eine Schmelzbadüberwachungs (melt pool monitoring) - Vorrichtung.

Bei dem Außenverbindungselement handelt es sich um ein physisches Verbindungselement, durch welches das Prozessmodul mit einem Ort außerhalb der Prozesskammer verbunden ist. Beispielsweise könnte das Außenverbindungselement ein Führungsarm sein, der das Prozessmodul bewegt und außerhalb der Prozesskammer mit einem entsprechenden Antrieb verbunden ist. Alternativ kann es sich bei dem Außenverbindungselement auch um ein elektrisches Versorgungskabel oder einen Zuführschlauch handeln, die zusammen mit dem Prozessmodul bewegt werden, beispielsweise in einem Fall, in dem die Antriebseinheit für das Prozessmodul im Innern der Prozesskammer angeordnet ist und mit dem Prozessmodul mitbewegt wird oder in einem Fall, in dem der Zuführschlauch der Zufuhr und/oder Abfuhr einer Kühlflüssigkeit oder eines Aufbaumaterials dient.

Weiter bevorzugt ist die Abdeckeinrichtung dergestalt mit dem Außenverbindungselement verbunden, dass bei einer Bewegung des Außenverbindungselements in Längsrichtung der Öffnung die Ausdehnung der Abdeckfläche in Längsrichtung der Öffnung variiert wird.

Obwohl es möglich ist, die Abdeckfläche der Abdeckeinrichtung separat von der Bewegung des Außenverbindungselements einzustellen, so ist es doch von Vorteil, wenn die Einzelelemente durch das Außenverbindungselement mitbewegt werden. In diesem Fall wird bei einer Bewegung des Außenverbindungselements die Öffnung in der Wand der Prozesskammer automatisch geöffnet und verschlossen. Solch ein Vorgehen ist insbesondere dadurch möglich, dass die Abdeckeinrichtung eine Mehrzahl von Einzelelementen aufweist und somit nur kleine Massen (nämlich jene einer geringen Anzahl an Einzelelementen) bewegt werden. Dadurch resultiert nur eine geringe Mehrbelastung des Antriebs, der für die Bewegung des Außenverbindungselements verantwortlich ist.

Bevorzugt ist eine Abdeckeinrichtung in Längsrichtung der Öffnung zu beiden Seiten des Außenverbindungselements angeordnet.

Bevorzugt sind die beiden Abdeckeinrichtungen so mit dem Außenverbindungselement verbunden, dass bei einer Bewegung des Außenverbindungselements in Längsrichtung der Öffnung die Ausdehnung der jeweiligen Abdeckfläche in Längsrichtung der Öffnung variiert wird. Bei einer Bewegung des Außenverbindungselements wird dann die Abdeckfläche der einen Abdeckeinrichtung vergrößert, während gleichzeitig die Abdeckfläche der anderen Abdeckeinrichtung verkleinert wird. Durch das Vorhandensein von zwei Abdeckeinrichtungen neben dem Außenverbindungselement ist es möglich, die gesamte Öffnung in der Kammerwand abzudecken bzw. abzuschirmen mit Ausnahme jenes Bereichs, der innerhalb der Öffnung von dem Außenverbindungselement eingenommen wird, und der unmittelbaren Umgebung dieses Bereichs. Dadurch kann also das Innere der Prozesskammer besonders wirkungsvoll gegenüber der Umgebung der Prozesskammer abgeschirmt werden.

Bei einer bevorzugten Ausführungsform umgibt eine Dichtmanschette das Außenverbindungselement an der Stelle, an der es durch die Öffnung hindurchgeführt ist. Die Dichtmanschette ist dabei geeignet, einen Material- und Energiedurchtritt durch die Öffnung, insbesondere an der Grenze zwischen Dichtmanschette und Außenverbindungselement abzusenken oder sogar zu verhindern. Weiter bevorzugt ist die Dichtmanschette jeweils mit jenem Einzelelement der Abdeckeinrichtungen verbunden, das dem Außenverbindungselement am nächsten gelegen ist. Die Verbindung der Dichtmanschette mit den Einzelelementen ist dabei dergestalt, dass ein Material- und Energiedurchtritt durch die Öffnung an der Grenze zwischen der Dichtmanschette und den Einzelelementen abgesenkt oder sogar verhindert wird. Die Verbindung kann z.B. als Klemmverbindung, Klebeverbindung, etc. ausgestaltet sein.

Bevorzugt ist die Abdeckeinrichtung an den Rändern der Öffnung (31) so gehaltert, dass sie demontiert werden kann.

Durch die reversible Demontierbarkeit einer Abdeckeinrichtung kann diese ohne Schwierigkeiten und ohne bleibende Veränderungen an der Kammerwand von der Prozesskammer entfernt werden, was praktisch für Wartungsmaßnahmen in der Prozesskammer aber auch zweckmäßig für Reinigungs- oder Reparaturvorgänge an der Abdeckeinrichtung ist. Hierzu kann z.B. ein Gehäuse bzw. ein Rahmen der Abdeckeinrichtung, in dem die Einzelelemente gefasst sind, beispielsweise von der Wand der Prozesskammer abgeschraubt werden.

Grundsätzlich können die Einzelelemente einer Abdeckeinrichtung in den Rand der abzudeckenden Öffnung eingreifen, so dass sie bei ihrer Bewegung vom Rand der Öffnung geführt werden, beispielsweise indem die Lamellenhalter den Rand der Öffnung u-förmig umschließen oder aber auch nur an dem Rand der Öffnung entlang gleiten oder vom Rand u-förmig umschlossen werden. Es ist jedoch auch möglich, dass eine Schiene, entlang der sich die Einzelelemente beim Variieren der Ausdehnung der Abdeckfläche bewegen, Bestandteil der Abdeckeinrichtung ist, z.B. Bestandteil des Rahmens oder Gehäuses, und dann mit der Abdeckeinrichtung zusammen von der Prozesskammer reversibel entfernbar ist.

Eine offenbarte Abdeckeinrichtung zur reversiblen Abdeckung einer länglichen Öffnung in einer Kammerwandung einer Prozesskammer einer additiven Herstellvorrichtung zum Herstellen eines dreidimensionalen Objekts durch selektives schichtweises Verfestigen von Aufbaumaterial weist eine Abdeckfläche zum Abdecken und/oder Abschirmen der Öffnung auf, wobei die Ausdehnung der Abdeckfläche in Längsrichtung der Öffnung variierbar ist und die Abdeckeinrichtung eine Mehrzahl gleichartiger Einzelelemente aufweist, die so miteinander verbunden sind, dass sie in der Längsrichtung der Öffnung relativ zueinander bewegbar sind. Bevorzugt ist dabei die Abdeckeinrichtung in der Lage die längliche Öffnung vollständig abzudecken und/oder die gesamte Öffnung abzuschirmen.

Anspruch 12 beschreibt ein additives Herstellverfahren zum Herstellen eines dreidimensionalen Objekts.

Bei dem erfindungsgemäßen additiven Herstellverfahren kann durch die Verwendung einer eine Mehrzahl gleichartiger Einzelelemente aufweisenden Abdeckeinrichtung dafür gesorgt werden, dass Öffnungen in einer Wand der Prozesskammer, die für Durchführungen zu Bestandteilen der Herstellvorrichtung während eines Herstellverfahrens genutzt werden, rasch und zuverlässig verschlossen werden können.

Vorzugsweise ist bei dem erfindungsgemäßen additiven Herstellverfahren weiterhin innerhalb der Prozesskammer ein in einer Bewegungsrichtung B über ein Baufeld bewegbares Prozessmodul vorhanden ist, das zum Durchführen eines zum Herstellen des dreidimensionalen Objekts erforderlichen Prozesses geeignet ist, wobei die Bewegungsrichtung B identisch zu der Längsrichtung der Öffnung ist, wobei an dem Prozessmodul ein Außenverbindungselement angebracht ist, dass durch die Öffnung hindurchgeführt ist,
wobei bei der Herstellung das Prozessmodul mit einer Geschwindigkeit von mindestens 200 mm/s, bevorzugt mindestens 400 mm/s, besonders bevorzugt mindestens 600 mm/s und einer Höchstgeschwindigkeit von 800 mm/s bewegt wird und/oder einer Beschleunigung von mindestens 1 m/s², bevorzugt mindestens 10 m/s² mm/s, besonders bevorzugt mindestens 20 m/s² und höchstens 30 m/s² ausgesetzt wird.

Infolge der geringen Masse der Einzelelemente ist es möglich, die Öffnung in der Wand der Prozesskammer mit hoher Geschwindigkeit zu verschließen oder zu öffnen. Dadurch wird es aber möglich auch einzelne Prozessschritte in der Prozesskammer, bei denen z.B. ein Prozessmodul mittels eines Führungsarms von außerhalb der Prozesskammer bewegt wird, mit hoher Geschwindigkeit durchzuführen. Die entsprechenden Prozessschritte werden durch die Änderung der Abdeckfläche der Abdeckeinrichtung nicht merklich verlangsamt.

Weitere Merkmale und Zweckmäßigkeiten der Erfindung ergeben sich aus der Beschreibung von Ausführungsbeispielen anhand der beigefügten Figuren.
- Fig. 1: zeigt eine schematische, teilweise im Schnitt dargestellte Ansicht einer beispielhaften Vorrichtung zum additiven Herstellen eines dreidimensionalen Objekts,
- Fig. 2: zeigt schematisch eine Ansicht eines Einzelelements einer beispielhaften Abdeckeinrichtung
- Fig. 3: zeigt eine schematische Seitenansicht dreier Einzelelemente zur Veranschaulichung der Erzeugung eines Kippmoments mittels der an einem Einzelelement angreifenden beiden Verbindungselemente,
- Fig. 4: veranschaulicht die Situation von Fig. 3 für eine Vielzahl von Verbindungselementen,
- Fig. 5: und 6 zeigen unterschiedliche Ansichten einer beispielhaften erfindungsgemäßen Abdeckeinrichtung,
- Fig. 7: zeigt ein Beispiel eines Verbindungselements, das ein Federelement aufweist,
- Fig. 8: zeigt schematisch eine Draufsicht auf eine Kammerwand einer Prozesskammer, in der eine Abdeckeinrichtung in einem Zustand mit geringer Ausdehnung der Abdeckfläche lediglich einen Teil einer Öffnung in der Kammerwand abdeckt,
- Fig. 9: zeigt schematisch eine Draufsicht auf eine Kammerwand einer Prozesskammer, in der eine Abdeckeinrichtung in einem Zustand mit nahezu maximaler Abdeckfläche fast die gesamte Öffnung in der Kammerwand abdeckt,
- Fig. 10: zeigt schematisch eine Ansicht eines Einzelelements ähnlich jener von Figur 2, wobei jedoch das Anliegen des Einzelelements an einer Führungsschiene veranschaulicht ist und
- Fig. 11: und 12 zeigen unterschiedliche Beispiele für die Gestalt der Schiene und der Aussparung an den Lamellenhaltern.

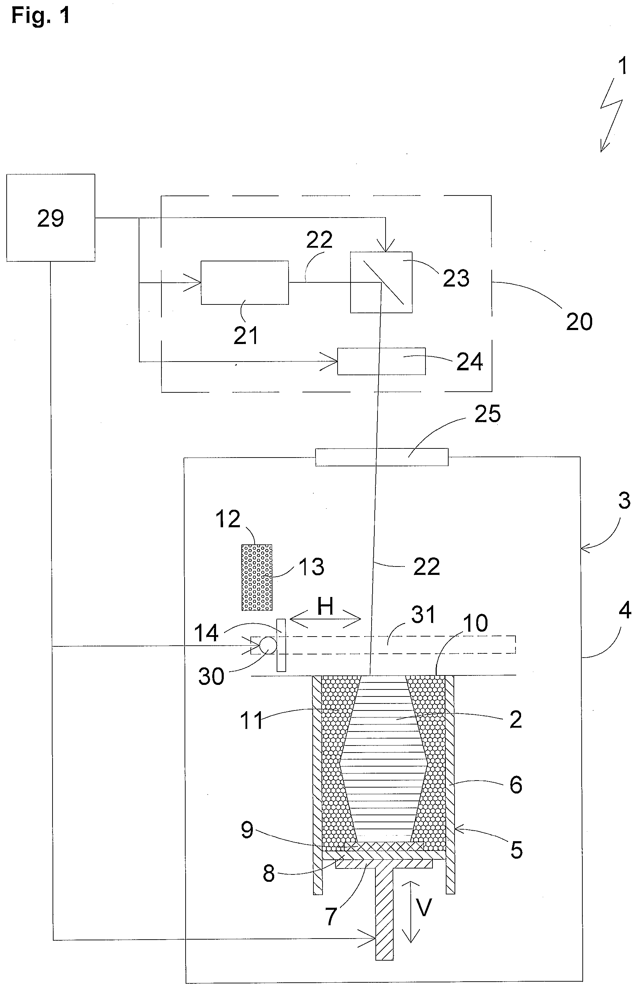

Es soll zunächst nachfolgend am Beispiel einer Lasersinter- oder -schmelzvorrichtung eine erfindungsgemäße additive Herstellvorrichtung unter Bezugnahme auf Fig. 1 beschrieben werden.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 10 definiert, wobei der innerhalb der Öffnung liegende Bereich der Arbeitsebene 10, der zum Aufbau des Objekts 2 verwendet werden kann, als Baufeld bezeichnet wird.

In dem Baubehälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 ausgebildete Platte sein, die an dem Träger 7 befestigt ist, oder sie kann integral mit dem Träger 7 ausgebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Baubehälter 5 auf der Bauplattform 9 zu bildende Objekt 2 unterhalb einer Arbeitsebene 10, die durch den oberen Rand des Behälter 5 definiert ist, in einem Zwischenzustand dargestellt mit mehreren verfestigten Schichten, umgeben von unverfestigt gebliebenem Aufbaumaterial 11.

Die Lasersinter- oder -schmelzvorrichtung 1 enthält weiterhin einen Vorratsbehälter 12 für ein Aufbaumaterial 13, in diesem Beispiel ein durch elektromagnetische Strahlung verfestigbares Pulver, und einen in einer horizontalen Richtung H bewegbaren Beschichter 14 zum Aufbringen des Aufbaumaterials 13 auf die Arbeitsebene 10. Zum Bewegen des Beschichtungsmoduls 14 ist ein nicht näher gezeigter Antrieb außerhalb der Wandung 4 der Prozesskammer 3 vorgesehen. Das Beschichtungsmodul 14 ist mittels eines Führungsarms 30, der in Fig. 1 senkrecht zur Zeichnungsrichtung verläuft, mit dem Antrieb verbunden. Dabei ist der Führungsarm 30 durch eine (durch eine gestrichelte Linie dargestellte) längliche Öffnung 31 in der Wandung 4 hindurchgeführt, entlang derer der Führungsarm 30 bewegbar ist.

Die beispielhafte additive Herstellvorrichtung 1 enthält ferner eine Energieeintragseinrichtung 20 mit einem Laser 21, der einen Laserstrahl 22 erzeugt, welcher über eine Umlenkvorrichtung 23 umgelenkt wird und durch eine Fokussiervorrichtung 24 über ein Einkoppelfenster 25, das an der Oberseite der Prozesskammer 3 in deren Wandung angebracht ist, auf die Arbeitsebene 10 fokussiert wird.

Beim Lasersintern oder Laserschmelzen kann eine Energieeintragseinrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser aufweisen. Der in Fig. 1 gezeigte spezifische Aufbau einer Lasersinter- oder -schmelzvorrichtung ist daher für die vorliegende Erfindung nur beispielhaft und kann natürlich auch abgewandelt werden, insbesondere bei Verwendung einer anderen Energieeintragseinrichtung als der gezeigten.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 7 um eine Höhe abgesenkt, die der gewünschten Schichtdicke entspricht. Durch Verfahren des Beschichters 14 über die Arbeitsebene 10 wird dann eine Schicht des pulverförmigen Aufbaumaterials 13 aufgebracht. Das Aufbringen erfolgt zumindest über den gesamten Querschnitt des herzustellenden Objekts 2 hinweg, vorzugsweise im gesamten Baufeld, also dem Bereich der Arbeitsebene 10, der innerhalb der oberen Öffnung des Behälters 5 liegt. Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und der Prozesskammer 3 entnommen werden kann.

Zum Verfahren des Beschichters 14 über die Arbeitsebene 10 wird der Führungsarm 30 durch den Antrieb entlang der Längsrichtung der Öffnung 31 in der Kammerwand 4, in Fig. 1 durch den Doppelpfeil mit dem Bezugszeichen H gekennzeichnet, bewegt.

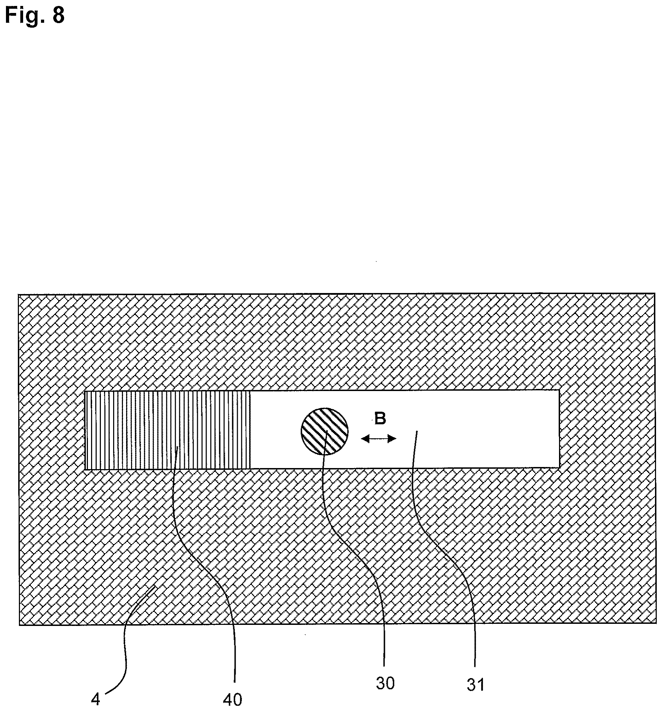

Diesbezüglich zeigt Fig. 8 eine Draufsicht auf die Kammerwand 4 mit der länglichen Öffnung 31 darin. Lediglich schematisch ist ein Querschnitt durch den Führungsarm 30 gezeigt, der in der länglichen Öffnung 31 in der durch den Doppelpfeil angedeuteten Bewegungsrichtung H, die mit der Längsrichtung der Öffnung 31 identisch ist, bewegbar ist.

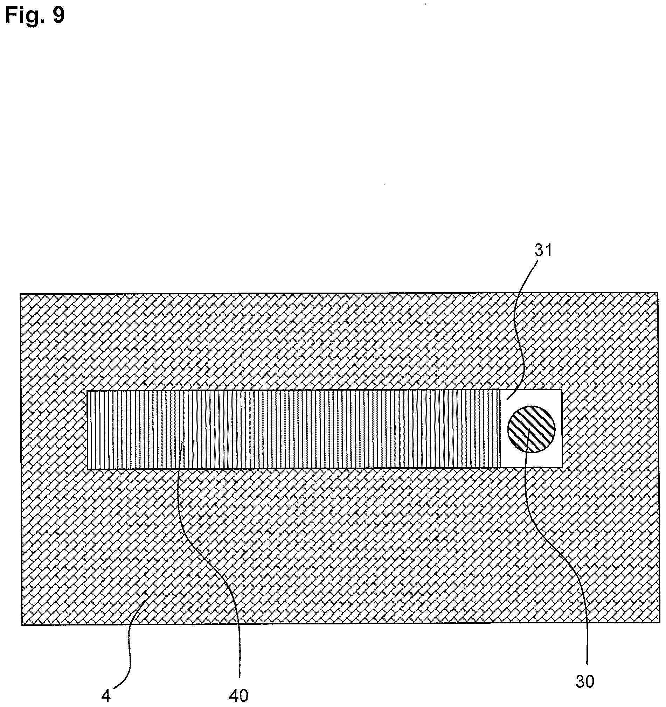

Man erkennt in Figur 8 weiterhin eine Abdeckeinrichtung 40, deren Ausdehnung in der Längsrichtung der Öffnung 31 variierbar ist. Während Fig. 8 die Abdeckeinrichtung 40 in einem Zustand mit geringer Ausdehnung zeigt, in dem nur ein geringer Teil der Öffnung 31 abgedeckt wird, zeigt Figur 9 entsprechend eine Situation, in der die Abdeckeinrichtung 40 einen Großteil der Öffnung 31 bedeckt und dadurch verschließt. Beispielsweise könnte in Figur 8 der Führungsarm 30 relativ zum Baufeld an der in Figur 1 gezeigten Position angeordnet sein, während in Figur 9 der Führungsarm 30 nahe oder jenseits des rechten Randes des Baubehälters 5 in Figur 1 angeordnet ist.

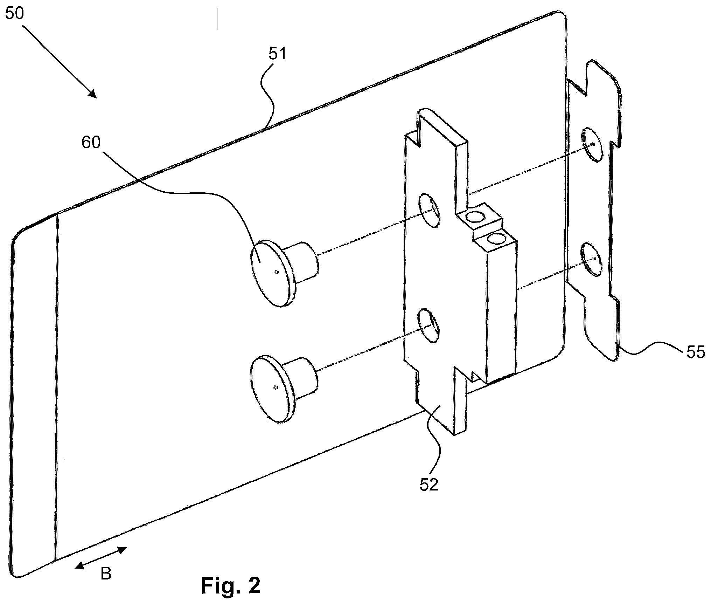

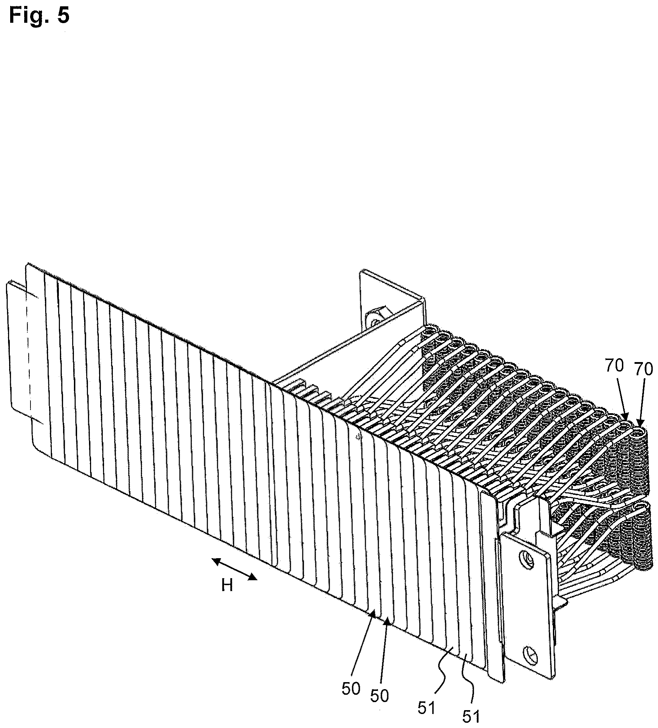

Wie anhand der Figuren 5 bis 7 ersichtlich ist, weist die Abdeckeinrichtung 40 eine Mehrzahl an Einzelelementen 50 auf, die, wenn die Abdeckeinrichtung in der Öffnung 31 angeordnet ist, relativ zueinander in der Längsrichtung der Öffnung 31 (also in der Bewegungsrichtung H in Fig. 5) bewegbar sind. Der Aufbau eines Einzelelements 50 ist in Fig. 2 dargestellt. Im Wesentlichen besteht ein Einzelelement aus einer Lamelle 51 und einem Lamellenhalter 52, welcher an der Lamelle 51 befestigt ist. Fig. 2 zeigt dabei beispielhaft eine Befestigung des Lamellenhalters an der Lamelle mittels Bolzenelementen 60, die in eine mit der Lamelle 51 verbundene Lamellenbefestigung 55 eingreifen. Die Befestigung der Bolzenelemente 60 an der Lamellenbefestigung 55 erfolgt dabei z.B. mittels Presspassung oder alternativ durch Verschrauben oder Vernieten. Es ist jedoch auch eine andere Befestigung, beispielsweise mittels einer Schweiß- oder Klebeverbindung, möglich.

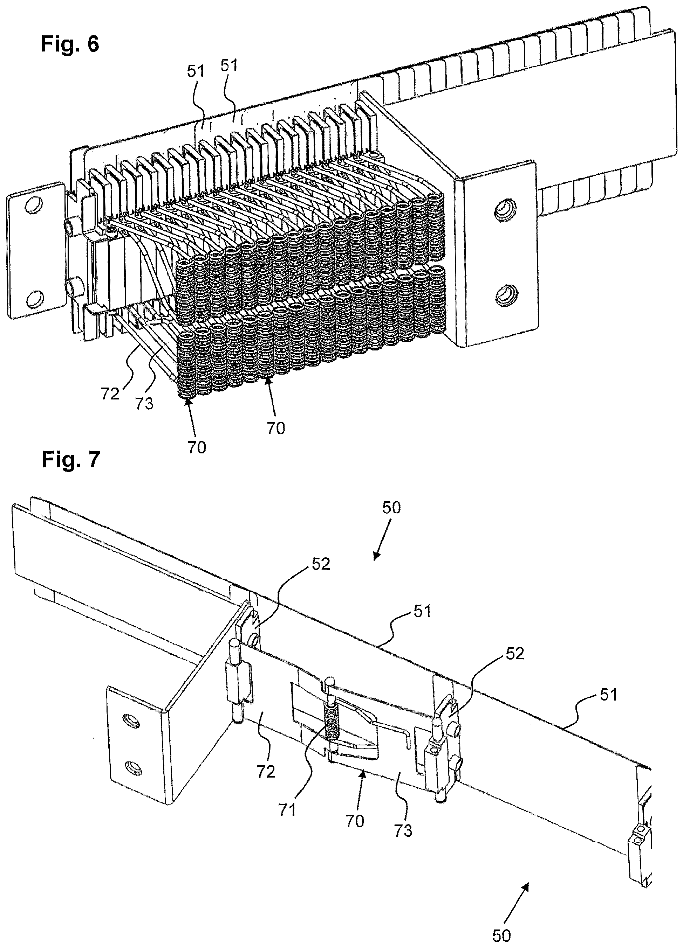

Wenn bei der Abdeckeinrichtung 40 die Einzelelemente 50 in der Bewegungsrichtung H gegeneinander bewegt werden, dann wird dadurch ein unterschiedlicher gegenseitiger Überlappungsgrad der Lamellen 51 eingestellt. Figur 5 und 6 zeigen diesbezüglich einen Zustand, in dem die Lamellen von jeweils zwei benachbarten Einzelelementen 50 sich nahezu vollständig überdecken. Während die Ansicht von Fig. 5 die im montierten Zustand der Abdeckeinrichtung 40 zur Außenseite der Kammerwand 4 zeigende Vorderseite der Lamellen zeigt, zeigt Fig. 6 eine Ansicht, in der die zur Innenseite der Prozesskammer zeigende Rückseite der Lamellen dargestellt ist.

Figur 7 zeigt einen Zustand, in dem die Lamellen 51 der Einzelelemente 50 in nur sehr geringem Umfang überlappen. In diesem Zustand weist also die Abdeckeinrichtung 40 ihre nahezu größte Ausdehnung auf. Weiterhin erkennt man in Fig. 7, dass zwei Einzelelemente 50 über ein Verbindungselement 70 miteinander verbunden sind. Das Verbindungselement 70 ist in diesem Beispiel an den jeweiligen Lamellenhaltern 52 zweier benachbarter Einzelelemente 50 befestigt. Bevorzugt ist das Verbindungselement in der Lage, seine Abmessung zwischen den beiden Stellen, mit denen es an den beiden Einzelelementen 50 angreift (in Fig. 7 die Stellen, die an den Lamellenhaltern 52 angreifen) zu verändern. Dadurch kann auch die Ausdehnung der Abdeckeinrichtung 40 abgeändert werden.

Bei dem Beispiel der Figur 7 dient eine zwei Flügelelemente 72 und 73 miteinander verbindende Schenkelfeder 71 dazu, dem Verbindungselement 70 Elastizität in der Richtung zu verleihen, in der die Einzelelemente 50 gegeneinander verschoben werden sollen. Jedes der beiden Flügelelemente 73 und 74 greift dabei mittels eines Dreh- bzw. Scharniergelenks (auch ein Schraubgelenk wäre möglich) an dem entsprechenden Lamellenhalter 52 an. Während Fig. 7 ein Verbindungselement 70 in einem Zustand zeigt, in dem es seine größte Abmessung bzw. Ausdehnung in Verschieberichtung der Einzelelemente 50 aufweist, zeigen Fig. 5 und 6 jeweils eine Mehrzahl von Verbindungselementen 70 in einem zusammengeschobenen Zustand, in dem die Abmessung bzw. Ausdehnung der Verbindungselemente in Verschieberichtung der Einzelelemente 50 minimal ist. Die Flügelelemente 72 und 73 sind dabei in Fig. 5 und 6 als Rahmen aus stabförmigen Elementen ausgebildet, im Gegensatz zu den Plattenelementen in Fig. 7.

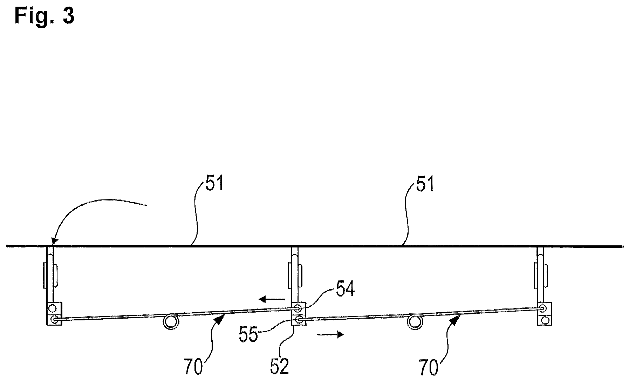

Wenn die Angriffspunkte der Verbindungselemente 70 an einem Lamellenhalter 52 voneinander verschieden sind, insbesondere einen Versatz gegeneinander in einer Richtung senkrecht zur Verschieberichtung der Einzelelemente 50 aufweisen, dann wird dadurch ein Kippmoment bzw. Drehmoment an dem Lamellenhalter 52 und daher an dem Einzelelement 50 erzeugt. Dies ist in Figur 3 schematisch dargestellt, in der die Zugkraft der Verbindungselemente 70 auf den Lamellenhalter 52 in der Mitte mittels gerader Pfeile veranschaulicht wird. Da die Angriffspunkte 54 und 55 für die beiden Lamellenhalter 70 unterschiedlich sind, entsteht an dem linken Einzelelement ein durch einen gekrümmten Pfeil veranschaulichtes Drehmoment, welches die Lamelle 51 des linken Einzelelements mit ihrem vom mit ihr verbundenen Lamellenhalter 52 entfernten Ende gegen das benachbarte Einzelelement (insbesondere die benachbarte Lamelle) drückt. Damit kann die Dichtheit der Abdeckeinrichtung 40, insbesondere im Hinblick auf einen möglichen Austritt von Aufbaumaterial und auf den Austritt von Wärmeenergie aus der Prozesskammer, erhöht werden. Auch ein Gasaustausch wird hierdurch stark herabgesetzt.

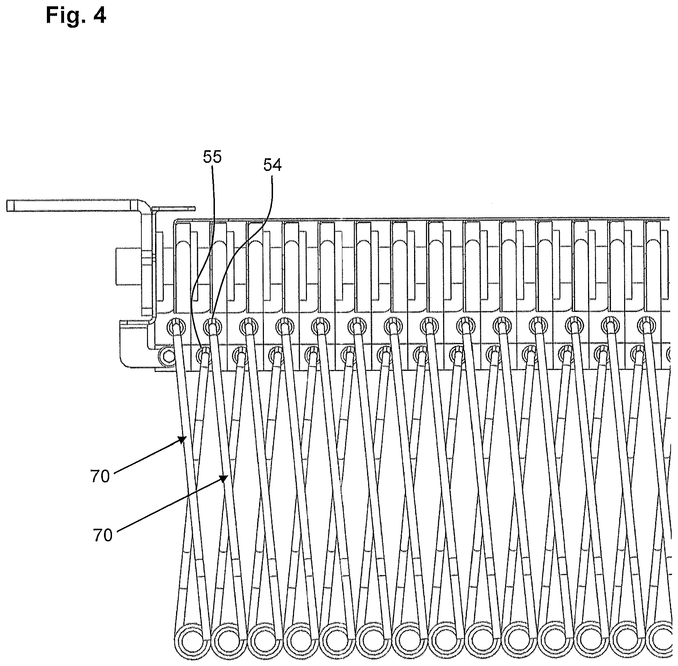

Fig. 4 veranschaulicht die Situation von Fig. 3 für eine Vielzahl von Verbindungselementen 70.

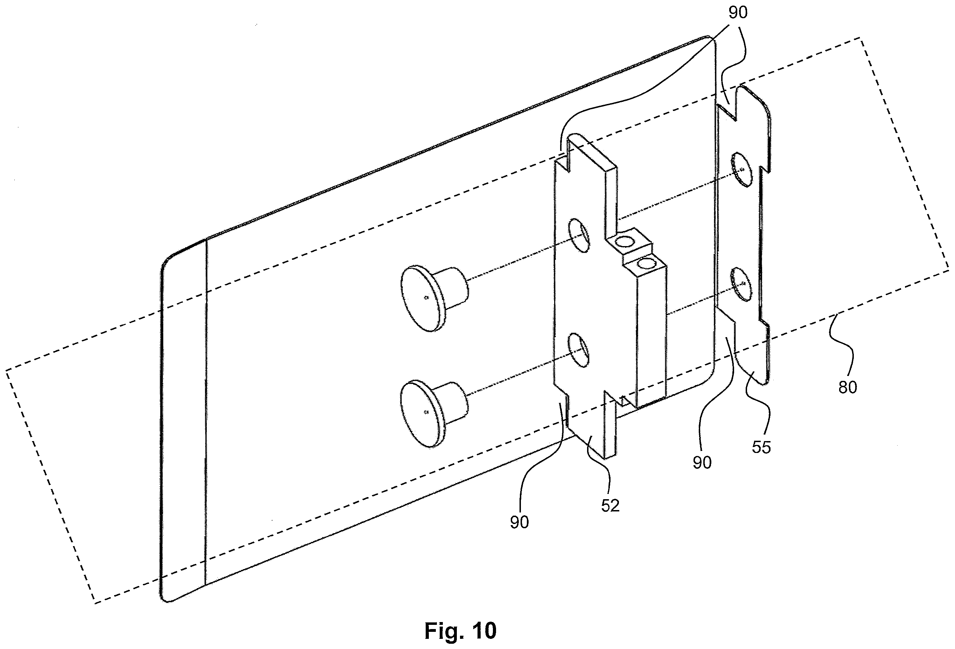

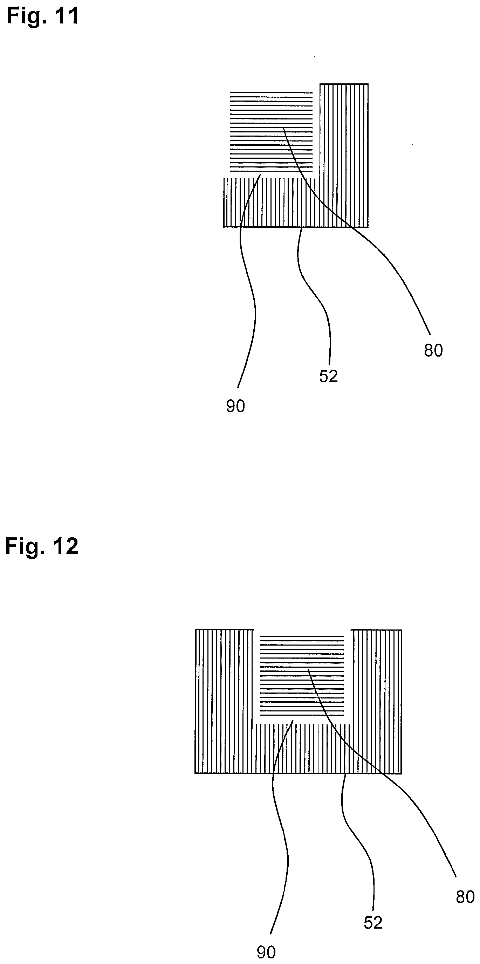

Um die Relativbewegung der Einzelelemente 50 gegeneinander zu stabilisieren bietet es sich an, die Bewegung der Einzelelemente 50 zu führen, insbesondere entlang einer Führungsschiene. Dies ist in Fig. 10 veranschaulicht, die im Wesentlichen identisch zur Darstellung eines Einzelelementes in Fig. 2 ist. Die Führungsschiene 80 ist in Fig. 10 in sehr schematischer Weise gestrichelt dargestellt. Man erkennt an der Ober- und Unterkante des Lamellenhalters 52 Aussparungen 90, die mit zwei Seiten an der Führungsschiene 80 anliegen können. Dies ist in Fig. 11 veranschaulicht, die einen Schnitt durch die Führungsschiene 80 zusammen mit einem Teil des Lamellenhalters 52 zeigt. Aus Gründen der Anschaulichkeit ist in der Figur ein Spalt zwischen der Schiene 80 und dem Lamellenhalter 52 gezeigt, der natürlich nicht vorhanden ist, wenn der Lamellenhalter an einer Seite oder zwei Seiten an der Schiene 80 anliegt. Fig. 12 zeigt den Fall, in dem die Aussparung 90 nicht an einer Ecke des Lamellenhalters ausgebildet ist, sondern als Spalt in der Oberkante des Lamellenhalters 52. In diesem Fall umschließt der Lamellenhalter die Führungsschiene U-förmig.

Für die Gestalt der Aussparung 90 und die entsprechende Gestalt des Profils der Führungsschiene 80 gibt es keine Einschränkungen. So sind z.B. auch eine dreieckige Aussparung und ein entsprechendes Schienenprofil oder etwa eine Schwalbenschwanzverbindung zwischen Aussparung und Schiene möglich. Von Vorteil ist in jedem Fall eine möglichst reibungsarme Führung der Bewegung, unter Umständen kann zu diesem Zweck auf Wälzkörper zwischen Schiene und Einzelelementen zurückgegriffen werden.

Als Material für die Einzelelemente 50 kommt Metall in Frage, da dadurch für eine hinreichende Stabilität der Lamellen bei geringer Lamellendicke gesorgt werden kann. Da durch die Abdeckeinrichtung hindurch möglichst wenig Wärme übertragen werden soll, kommen insbesondere Stahl oder Titan als Materialien in Frage. Zur Erhöhung des Wärmereflexionsvermögens können die Einzelelemente, insbesondere die Lamellen, auf der dem Inneren der Prozesskammer zugewandten Seite entweder poliert sein oder mit einer Beschichtung versehen sein, die ein hohes Reflexionsvermögen für Infrarotstrahlung aufweist, z.B. Nickel. Eine Beschichtung kann ebenfalls eingesetzt werden, um die Stellen der Einzelelemente, die an der Führungsschiene 80 entlanggleiten oder die Oberfläche der Führungsschiene beständiger gegen Abrieb zu machen oder die Gleiteigenschaften zu verbessern, beispielsweise eine teflonbasierte Beschichtung. Ein geeignetes Material auf der Basis von PTFE mit Bronzebeimengung wird z.B. von der Firma Murtfeldt Kunststoffe GmbH & Co. KG, Dortmund unter dem Namen "Murflor^{®} + Bronze" vertrieben und weist eine Gleitreibungszahl (trocken) von 0,14 sowie eine Temperaturbeständigkeit bis 260° C auf.

## Patentansprüche

1. Additive Herstellvorrichtung (1) zum Herstellen eines dreidimensionalen Objekts (2) durch selektives schichtweises Verfestigen von Aufbaumaterial (13), enthaltend:
eine Prozesskammer (3) mit einer Kammerwandung (4),
wobei die Kammerwandung (4) der Prozesskammer zumindest eine längliche Öffnung (31) aufweist,
eine Abdeckeinrichtung mit einer Abdeckfläche zum Abdecken und/oder Abschirmen der zumindest einen Öffnung, wobei die Ausdehnung der Abdeckfläche in Längsrichtung der zumindest einen Öffnung (31) variierbar ist
und die Abdeckeinrichtung eine Mehrzahl gleichartiger Einzelelemente aufweist, die so miteinander verbunden sind, dass sie in der Längsrichtung der zumindest einen Öffnung (31) relativ zueinander bewegbar sind,
wobei jeweils zwei Einzelelemente über ein elastisches Element als Verbindungselement miteinander verbunden sind,
**dadurch gekennzeichnet, dass** zwei Verbindungselemente zu beiden Seiten eines Einzelelements an unterschiedlichen Stellen des Einzelelements angreifen, wobei die beiden Angriffspunkte der Verbindungselemente an dem Einzelelement einen unterschiedlichen Abstand senkrecht zur zumindest einen abzudeckenden Öffnung aufweisen.

2. Vorrichtung (1) nach Anspruch 1, bei der die Ausdehnung der Abdeckfläche in Längsrichtung der zumindest einen Öffnung (31) durch eine Relativbewegung der Einzelelemente gegeneinander in der Längsrichtung der zumindest einen Öffnung (31) variierbar ist.

3. Vorrichtung (1) nach einem der Ansprüche 1 bis 2, wobei das elastische Element ein Federelement, bevorzugt eine Rückstellfeder ist.

4. Vorrichtung (1) nach Anspruch 3, bei der das elastische Element über ein Scharnier mit einem Einzelelement verbunden ist.

5. Vorrichtung (1) nach einem der Ansprüche 1 bis 4, bei der die Einzelelemente Lamellen aufweisen, welche im Wesentlichen parallel zueinander ausgerichtet sind, wobei insbesondere ein zwischen zwei Einzelelementen angeordnetes Verbindungselement an einem sich quer, bevorzugt senkrecht, zu einer Lamellenebene erstreckenden Lamellenhalter angreift.

6. Vorrichtung (1) nach Anspruch 5, bei der benachbarte Lamellen bei einer nicht vollständigen Abdeckung der zumindest einen Öffnung (31) überlappen.

7. Vorrichtung (1) nach Anspruch 5 oder 6, bei der die Lamellen eine wärmereflektierende Oberfläche aufweisen und bevorzugt aus Metall ausgebildet sind.

8. Vorrichtung (1) nach einem der vorhergehenden Ansprüche, die weiterhin ein innerhalb der Prozesskammer (3) in einer Bewegungsrichtung (B) über ein Baufeld (10) bewegbares Prozessmodul (14) aufweist, das zum Durchführen eines zum Herstellen eines dreidimensionalen Objekts (2) erforderlichen Prozesses geeignet ist, wobei die Bewegungsrichtung (B) parallel zu der Längsrichtung der zumindest einen Öffnung (31) verläuft und wobei an dem Prozessmodul ein Außenverbindungselement (30) angebracht ist, das durch die zumindest eine Öffnung (31) hindurchgeführt ist.

9. Vorrichtung (1) nach Anspruch 8, wobei die Abdeckeinrichtung dergestalt mit dem Außenverbindungselement verbunden ist, dass bei einer Bewegung des Außenverbindungselements (30) in Längsrichtung der zumindest einen Öffnung (31) die Ausdehnung der Abdeckfläche in Längsrichtung der zumindest einen Öffnung (31) variiert wird.

10. Vorrichtung (1) nach Anspruch 8 oder 9, bei der eine Abdeckeinrichtung in Längsrichtung der zumindest einen Öffnung (30) zu beiden Seiten des Außenverbindungselements (30) angeordnet ist.

11. Vorrichtung (1) nach einem der vorangehenden Ansprüche, bei der die Abdeckeinrichtung an den Rändern der zumindest einen Öffnung (31) so gehaltert ist, dass sie demontiert werden kann.

12. Additives Herstellverfahren zum Herstellen eines dreidimensionalen Objekts (2) durch selektives schichtweises Verfestigen von Aufbaumaterial (13) in einer Prozesskammer (3) mit einer Kammerwandung (4), die zumindest eine längliche Öffnung (31) aufweist,
wobei die zumindest eine Öffnung durch eine Abdeckeinrichtung mit einer Abdeckfläche, deren Ausdehnung in Längsrichtung der zumindest einen Öffnung (31) variierbar ist, abgedeckt und/oder abgeschirmt wird, wobei die Abdeckeinrichtung eine Mehrzahl gleichartiger Einzelelemente aufweist, die so miteinander verbunden sind, dass sie in der Längsrichtung der zumindest einen Öffnung (31) relativ zueinander bewegbar sind,
wobei jeweils zwei Einzelelemente über ein elastisches Element als Verbindungselement miteinander verbunden sind, und
wobei zwei Verbindungselemente zu beiden Seiten eines Einzelelements an unterschiedlichen Stellen des Einzelelements angreifen, wobei die beiden Angriffspunkte der Verbindungselemente an dem Einzelelement einen unterschiedlichen Abstand senkrecht zur zumindest einen abzudeckenden Öffnung aufweisen.

13. Verfahren nach Anspruch 12, bei dem weiterhin innerhalb der Prozesskammer (3) ein in einer Bewegungsrichtung (B) über ein Baufeld (10) bewegbares Prozessmodul (14) vorhanden ist, das zum Durchführen eines zum Herstellen des dreidimensionalen Objekts (2) erforderlichen Prozesses geeignet ist, wobei die Bewegungsrichtung (B) identisch zu der Längsrichtung der zumindest einen Öffnung (31) ist, wobei an dem Prozessmodul ein Außenverbindungselement (30) angebracht ist, das durch die zumindest eine Öffnung (31) hindurchgeführt ist,
wobei bei der Herstellung das Prozessmodul mit einer Geschwindigkeit von mindestens 200 mm/s, bevorzugt mindestens 400 mm/s, besonders bevorzugt mindestens 600 mm/s und einer Höchstgeschwindigkeit von 800 mm/s bewegt wird und/oder einer Beschleunigung von mindestens 1 m/s², bevorzugt mindestens 10 m/s², besonders bevorzugt mindestens 20 m/s² und höchstens 30 m/s² ausgesetzt wird.

## Claims

1. An additive manufacturing device (1) for manufacturing a three-dimensional object (2) by selective solidification of a building material (13) layer by layer, comprising:
a process chamber (3) having a chamber wall (4),
wherein the chamber wall (4) of the process chamber has at least one elongate opening (31),
a cover device having a cover area for covering and/or shielding the at least one opening, the extent of the cover area being variable in the longitudinal direction of the at least one opening (31) and the cover device comprising a plurality of individual elements of similar type that are connected to one another in such a way that they are movable relative to one another in the longitudinal direction of the at least one opening (31),
wherein two individual elements each are connected to one another by means of an elastic element as a connection element,
**characterized in that** two connection elements engage on either side of an individual element at different points of the individual element, wherein the two engagement points of the connection elements at the individual element are at a different distance perpendicular to the at least one opening to be covered.

2. The device (1) according to claim 1, wherein the extent of the cover area in the longitudinal direction of the at least one opening (31) can be varied by a relative movement of the individual elements with respect to one another in the longitudinal direction of the at least opening (31).

3. The device (1) according to one of claims 1 to 2, wherein the elastic element is a spring element, preferably a return spring.

4. The device (1) according to claim 3, wherein the elastic element is connected to an individual element by means of a hinge.

5. The device (1) according to one of claims 1 to 4, wherein the individual elements comprise lamellas aligned substantially parallel to one another, in particular wherein a connection element arranged between two individual elements engages at a lamella support extending transverse, preferably perpendicular, to a lamella plane.

6. The device (1) according to claim 5, wherein adjacent lamellas overlap if the at least one opening (31) is not completely covered.

7. The device (1) according to claim 5 or 6, wherein the lamellas have a heat-reflecting surface and are preferably made of metal.

8. The device (1) according to one of the preceding claims, further comprising a process module (14) movable within the process chamber (3) in a direction of movement (B) across a build area (10) and which is suited to carry out a process required for producing a three-dimensional object (2), wherein the direction of movement (B) is parallel to the longitudinal direction of the at least one opening (31) and wherein an external connection element (30) is attached to the process module, which external connection element passes through the at least one opening (31).

9. The device (1) according to claim 8, wherein the cover device is connected to the external connection element in such a way that when the external connection element (30) moves in the longitudinal direction of the at least one opening (31), the extent of the cover area is varied in the longitudinal direction of the at least one opening (31).

10. The device (1) according to claim 8 or 9, wherein a cover device is arranged in the longitudinal direction of the at least one opening (30) on both sides of the external connection element (30).

11. The device (1) according to one of the preceding claims, wherein the cover device is mounted on the edges of the at least one opening (31) in such a way that it can be disassembled.

12. An additive manufacturing method for manufacturing a three-dimensional object (2) by selective solidification of a building material (13) layer by layer within a process chamber (3) having a chamber wall (4) that has at least one elongate opening (31),
wherein the at least one opening is covered and/or shielded by a cover device having a cover area the extent of which is variable in the longitudinal direction of the at least one opening (31), wherein the cover device comprises a plurality of individual elements of similar type that are connected to one another in such a way that they are movable relative to one another in the longitudinal direction of the at least one opening (31),
wherein two individual elements each are connected to one another by means of an elastic element as a connection element, and
wherein two connection elements engage on either side of an individual element at different points of the individual element, wherein the two engagement points of the connection elements at the individual element are at a different distance perpendicular to the at least one opening to be covered.

13. The method according to claim 12, wherein furthermore a process module (14) is present within the process chamber (3), which process module is movable in a direction of movement (B) across a build area (10) and is suited to carry out a process required for producing the three-dimensional object (2), wherein the direction of movement (B) is identical to the longitudinal direction of the at least one opening (31), wherein an external connection element (30) is attached to the process module, which external connection element passes through the at least one opening (31),
wherein during manufacturing the process module is moved at a speed of at least 200 mm/s, preferably at least 400 mm/s, particularly preferably at least 600 mm/s and at a maximum speed of 800 mm/s and/or is subjected to an acceleration of at least 1 m/s², preferably at least 10 m/s², particularly preferably at least 20 m/s² and at most 30 m/s².

## Revendications

1. Dispositif de fabrication additive (1) pour la fabrication d'un objet tridimensionnel (2) par solidification sélective couche par couche de matériau de construction (13), comprenant :
une chambre de processus (3) avec une paroi de chambre (4),
la paroi de chambre (4) de la chambre de processus présentant au moins une ouverture allongée (31),
un dispositif de recouvrement avec une surface de recouvrement pour recouvrir et/ou protéger l'au moins une ouverture, l'étendue de la surface de recouvrement dans la direction longitudinale de l'au moins une ouverture (31) étant variable,
et le dispositif de recouvrement présentant une pluralité d'éléments individuels de même type, qui sont reliés les uns aux autres de telle sorte qu'ils soient mobiles les uns par rapport aux autres dans la direction longitudinale de l'au moins une ouverture (31),
deux éléments individuels étant à chaque fois reliés les uns aux autres par un élément élastique en tant qu'élément de liaison,
**caractérisé en ce que** deux éléments de liaison viennent en prise des deux côtés d'un élément individuel en différents endroits de l'élément individuel, les deux points de prise des éléments de liaison sur l'élément individuel présentant une distance différente perpendiculairement à l'au moins une ouverture à recouvrir.

2. Dispositif (1) selon la revendication 1, dans lequel l'étendue de la surface de recouvrement dans la direction longitudinale de l'au moins une ouverture (31) est variable par un mouvement relatif des éléments individuels les uns par rapport aux autres dans la direction longitudinale de l'au moins une ouverture (31).

3. Dispositif (1) selon l'une quelconque des revendications 1 à 2, dans lequel l'élément élastique est un élément de ressort, de préférence un ressort de rappel.

4. Dispositif (1) selon la revendication 3, dans lequel l'élément élastique est relié à un élément individuel par une charnière.

5. Dispositif (1) selon l'une quelconque des revendications 1 à 4, dans lequel les éléments individuels présentent des lamelles, qui sont orientées sensiblement parallèlement les unes aux autres, un élément de liaison disposé entre deux éléments individuels venant en particulier en prise sur un support de lamelle s'étendant transversalement, de préférence perpendiculairement, à un plan de lamelle.

6. Dispositif (1) selon la revendication 5, dans lequel des lamelles adjacentes se chevauchent lors d'un recouvrement non complet de l'au moins une ouverture (31).

7. Dispositif (1) selon la revendication 5 ou 6, dans lequel les lamelles présentent une surface réfléchissant la chaleur et sont réalisées de préférence en métal.

8. Dispositif (1) selon l'une quelconque des revendications précédentes, qui présente en outre un module de processus (14) mobile à l'intérieur de la chambre de processus (3) dans une direction de déplacement (B) sur un champ de construction (10), qui est approprié pour réaliser un processus nécessaire pour la fabrication d'un objet tridimensionnel (2), la direction de déplacement (B) s'étendant parallèlement à la direction longitudinale de l'au moins une ouverture (31) et un élément de liaison extérieur (30) étant monté sur le module de processus, qui est guidé à travers l'au moins une ouverture (31).

9. Dispositif (1) selon la revendication 8, dans lequel le dispositif de recouvrement est relié à l'élément de liaison extérieur de telle sorte que lors d'un mouvement de l'élément de liaison extérieur (30) dans la direction longitudinale de l'au moins une ouverture (31), l'étendue de la surface de recouvrement dans la direction longitudinale de l'au moins une ouverture (31) soit variée.

10. Dispositif (1) selon la revendication 8 ou 9, dans lequel un dispositif de recouvrement est disposé dans la direction longitudinale de l'au moins une ouverture (30) des deux côtés de l'élément de liaison extérieur (30).

11. Dispositif (1) selon l'une quelconque des revendications précédentes, dans lequel le dispositif de recouvrement est supporté au niveau des bords de l'au moins une ouverture (31) de telle sorte qu'il puisse être démonté.

12. Procédé de fabrication additive pour la fabrication d'un objet tridimensionnel (2) par solidification sélective couche par couche de matériau de construction (13) dans une chambre de processus (3) avec une paroi de chambre (4), qui présente au moins une ouverture allongée (31),
l'au moins une ouverture étant recouverte et/ou protégée par un dispositif de recouvrement avec une surface de recouvrement, dont l'étendue dans la direction longitudinale de l'au moins une ouverture (31) est variable, le dispositif de recouvrement présentant une pluralité d'éléments individuels de même type, qui sont reliés les uns aux autres de telle sorte qu'ils soient mobiles les uns par rapport aux autres dans la direction longitudinale de l'au moins une ouverture (31),
deux éléments individuels étant à chaque fois reliés les uns aux autres par un élément élastique en tant qu'élément de liaison, et
deux éléments de liaison venant en prise des deux côtés d'un élément individuel en différents endroits de l'élément individuel, les deux points de prise des éléments de liaison sur l'élément individuel présentant une distance différente perpendiculairement à l'au moins une ouverture à recouvrir.

13. Procédé selon la revendication 12, dans lequel il est en outre prévu à l'intérieur de la chambre de processus (3) un module de processus (14) mobile dans une direction de déplacement (B) sur un champ de construction (10), qui est approprié pour réaliser un processus nécessaire pour la fabrication de l'objet tridimensionnel (2), la direction de déplacement (B) étant identique à la direction longitudinale de l'au moins une ouverture (31), un élément de liaison extérieur (30) étant monté sur le module de processus, qui est guidé à travers l'au moins une ouverture (31),
lors de la fabrication, le module de processus étant déplacé à une vitesse d'au moins 200 mm/s, de préférence d'au moins 400 mm/s, de manière particulièrement préférée d'au moins 600 mm/s et à une vitesse maximale de 800 mm/s et/ou étant soumis à une accélération d'au moins 1 m/s² , de préférence d'au moins 10 m/s² mm/s, de manière particulièrement préférée d'au moins 20 m/s² et d'au plus 30 m/s² .
